(19) 

**Europäisches Patentamt**
**European Patent Office**
**Office européen des brevets**

(11) **EP 4 703 233 A2**

(12) **EUROPEAN PATENT APPLICATION**
published in accordance with Art. 153(4) EPC

(43) Date of publication:
**04.03.2026 Bulletin 2026/10**

(21) Application number: **23842483.2**

(22) Date of filing: **20.11.2023**

(51) International Patent Classification (IPC):
**B61L 27/20** *(2022.01)*

(52) Cooperative Patent Classification (CPC):
**B61L 27/20;** Y02T 90/00

(86) International application number:
**PCT/CN2023/132514**

(87) International publication number:
**WO 2024/017421 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2023 CN 202311531578**

(71) Applicant: **CRSC Research & Design Institute Group Co., Ltd.**
**Beijing 100070 (CN)**

(72) Inventors:
 • **LIU, Zhongnan**
  **Beijing 100070 (CN)**
 • **CHEN, Zehua**
  **Beijing 100070 (CN)**

 • **JIANG, Qi**
  **Beijing 100070 (CN)**
 • **CHEN, Yi**
  **Beijing 100070 (CN)**
 • **ZHOU, Xuan**
  **Beijing 100070 (CN)**
 • **CAI, Hang**
  **Beijing 100070 (CN)**
 • **HAI, Ning**
  **Beijing 100070 (CN)**
 • **XIA, Miao**
  **Beijing 100070 (CN)**
 • **ZHOU, Hongxu**
  **Beijing 100070 (CN)**

(74) Representative: **Meissner Bolte Partnerschaft mbB**
**Patentanwälte Rechtsanwälte**
**Postfach 86 06 24**
**81633 München (DE)**

(54) **DICHOTOMY-BASED CALCULATION ALGORITHM AND SYSTEM FOR CALCULATION MODE SPEED-LIMIT VALUE**

(57) Disclosed is a dichotomy-based algorithm and system for calculating a calculation mode velocity limit value. The algorithm includes the following steps: acquiring calculating parameters: a velocity $V_s$ of a train at a starting point of a deceleration zone, a velocity $V_e$ of the train at an end point of the deceleration zone, and a distance $S_d$ between the starting point of the deceleration zone and a target position; setting intermediate variables: $V_{st}$, $V_{et}$, and $V_t$, where $V_{st}$ $t_k$ is an upper limit of a velocity search range, $V_{et}$ is a lower limit of the velocity search range, and $V_t$ is an intermediate value of the current velocity search range between $V_{st}$ and $V_{et}$; initializing the intermediate values: letting $$V_t = \frac{V_s + V_e}{2}$$ , $V_{st} = V_s$, and $V_{et} = V_e$; determining an initial braking velocity and a final braking velocity of the train, and calculating and obtaining a braking distance $S_b$, where the velocity $V_s$ of the train at the starting point of the deceleration zone is taken as the initial braking velocity, and the intermediate variable $V_t$ is taken as the final braking velocity; and judging whether a braking condition is met, where if the braking condition is met, the calculation mode velocity limit value is obtained; and the braking condition is as follows: whether $S_b$ is equal to $S_d$; or, whether a difference value between $V_{st}$ and $V_{et}$ is less than or equal to 1. The above algorithm reduces the complexity of the algorithm for calculating the calculation mode velocity limit value and improves the efficiency and accuracy of the calculation mode velocity limit value.

EP 4 703 233 A2

**(Cont. next page)**

Acquire calculating parameters: a velocity Vs of a train at a starting point of a deceleration zone, a velocity Vc of the train at an end point of the deceleration zone, and a distance Sd between the starting point of the deceleration zone and a target position

Set intermediate variables: Vst, Vet and Vt

Based on the acquired calculating parameters, initialize the intermediate variables: let Vt=(Vs+Ve)/2, Vst=Vs, and Vet=Ve

Determine an initial braking velocity and a final braking velocity of the train, and calculating and obtaining a braking distance Sb, where the velocity Vs of the train at the starting point of the deceleration zone is taken as the initial braking velocity, and the intermediate variable Vt is taken as the final braking velocity

Judge whether a braking condition is met, wherein if the braking condition is met, the calculation mode velocity limit value is obtained; and wherein the braking condition is as follows: whether Sb is equal to Sd; or, whether a difference value between Vst and Vet is less than or equal to 1

FIG. 1

**Description**

**FIELD OF TECHNOLOGY**

The present invention belongs to the field of rail traffic, and particularly relates to a dichotomy-based algorithm for calculating a calculation mode velocity limit value.

**BACKGROUND**

LKJ (L derives from the initial of spelling of a Lieche, K derives from the initial of spelling of Kongzhi, J derives from the initial of spelling of Jiankong, and LKJ represents a train operation monitoring device) is a train velocity monitoring device developed for railways in China to mainly guarantee the safe train operation, wherein when a train operates in a deceleration zone, LKJ calculates a velocity curve generated as a control mode curve by taking an end point of the deceleration zone in front of the operating train from a starting point of the deceleration zone. Further, the control mode curve consists of calculation mode velocity limit values at positions from the starting point of the deceleration zone to the end point of the deceleration zone in the front, where the deceleration zone is an area where the train operation is monitored and the velocity limit value generated by calculating a braking distance by the LKJ decreases from a constant velocity area to a control target point when the train is in front of a deceleration location or a deceleration signal (including a stopping signal); the calculation mode velocity limit value is the velocity limit value generated by calculating the braking distance by the LKJ to prevent the train exceeds the limited velocity at the control target point; and besides the attributes of the locomotive itself, the braking distance is mainly affected by the initial braking velocity and the final braking velocity. Therefore, when the calculation mode velocity limit value at the target position in the deceleration zone is calculated, it is needed to traverse all velocities between the starting point and the end point of the deceleration zone in sequence to find out the corresponding velocity at which the braking distance is just less than the target position distance as the calculation mode velocity limit value at the target position. However, the above calculation mode is low in calculation efficiency and high in complexity.

To calculate the calculation mode velocity limit value efficiently increasingly becomes the technical problem needed to be urgently solved.

**SUMMARY**

To solve the above problem, the present invention provides a dichotomy-based algorithm and system for calculating a calculation mode velocity limit value. The above algorithm reduces the complexity of the algorithm for calculating the calculation mode velocity limit value and improves the efficiency and accuracy of the calculation mode velocity limit value.

An object of the present invention is to provide a dichotomy-based algorithm for calculating a calculation mode velocity limit value, including the following steps:

acquiring calculating parameters: a velocity $V_s$ of a train at a starting point of a deceleration zone, a velocity $V_e$ of the train at an end point of the deceleration zone, and a distance $S_d$ between the starting point of the deceleration zone and a target position;

setting intermediate variables: $V_{st}$, $V_{et}$, and $V_t$, where $V_{st}$ is an upper limit of a velocity search range, $V_{et}$ is a lower limit of the velocity search range, and $V_t$ is an intermediate value of the current velocity search range between $V_{st}$ and $V_{et}$ ;

based on the acquired calculating parameters, initializing the intermediate variables: letting $V_t = \dfrac{V_s + V_e}{2}$, $V_{st} = V_s$, and $V_{et} = V_e$ ;

determining an initial braking velocity and a final braking velocity of the train, and calculating and obtaining a braking distance $S_b$, where the velocity $V_s$ of the train at the starting point of the deceleration zone is taken as the initial braking velocity, and the intermediate variable $V_t$ is taken as the final braking velocity; and

judging whether a braking condition is met, wherein if the braking condition is met, the calculation mode velocity limit value is obtained; and

the braking condition is as follows:

whether $S_b$ is equal to $S_d$ ; or,

whether a difference value between $V_{st}$ and $V_{et}$ is less than or equal to 1.

further, the step of judging whether the braking condition is met further includes: if the braking condition is not met, updating values of the intermediate variables;

based on the updated values of the intermediate variables, returning, and determining the initial braking velocity and the final braking velocity of the train, and calculating and obtaining the braking distance $S_b$, where the velocity $V_s$ of the train at the starting point of the deceleration zone is taken as the initial braking velocity, and the intermediate variable $V_t$ with the updated value is taken as the final braking velocity.

Further, the step of updating values of the intermediate variables includes:
judging whether $S_b$ is less than $S_d$ , if $S_b$ is less than $S_d$ , letting the intermediate variable $V_{st} = V_t$, $V_{et}$ unchanged,

$$V_t = \frac{V_{st} + V_{et}}{2}$$ ; and if not, letting the intermediate variable $V_{et} = V_t$, $V_{st}$ unchanged, $$V_t = \frac{V_{st} + V_{et}}{2}$$ .

Further, when the values of $$V_t = \frac{V_s + V_e}{2}$$ and $$V_t = \frac{V_{st} + V_{et}}{2}$$ are non-integers, both the values are rounded down.

Further, whether a braking condition is met is judged, where if the braking condition is met, the calculation mode velocity limit value is obtained, wherein
the calculation mode velocity limit value is the value of the intermediate variable $V_t$.

Another object of the present invention is to provide a dichotomy-based system for calculating a calculation mode velocity limit value, including:

an acquisition module, configured to acquire calculating parameters: a velocity $V_s$ of a train at a starting point of a deceleration zone, a velocity $V_e$ of the train at an end point of the deceleration zone, and a distance $S_d$ between the starting point of the deceleration zone and a target position;
a setting module, configured to set intermediate variables: $V_{st}$, $V_{et}$, and $V_t$, where $V_{st}$ is an upper limit of a velocity search range, $V_{et}$ is a lower limit of the velocity search range, and $V_t$ is an intermediate value of the current velocity search range between $V_{st}$ and $V_{et}$ ;
an initializing module, configured to, based on the acquired calculating parameters, initialize the intermediate variables: letting $$V_t = \frac{V_s + V_e}{2}$$ , $V_{st} = V_s$, and $V_{et} = V_e$ ;
a calculation module, configured to determine an initial braking velocity and a final braking velocity of the train, and calculate and obtain a braking distance $S_b$, where the velocity $V_s$ of the train at the starting point of the deceleration zone is taken as the initial braking velocity, and the intermediate variable $V_t$ is taken as the final braking velocity; and
a judging module, configured to judge whether a braking condition is met, wherein if the braking condition is met, the calculation mode velocity limit value is obtained; and
the braking condition is as follows:

whether $S_b$ is equal to $S_d$; or,

whether a difference value between $V_{st}$ and $V_{et}$ is less than or equal to 1.

Further, the system further includes an update module, configured to, when the judging module judges that the braking condition is not met, update the values of the intermediate variables, including:
judging whether $S_b$ is less than $S_d$ , if $S_b$ is less than $S_d$ , letting the intermediate variable $V_{st} = V_t$, $V_{et}$ unchanged,

$$V_t = \frac{V_{st} + V_{et}}{2}$$ ; and if not, letting the intermediate variable $V_{et} = V_t$, $V_{st}$ unchanged, $$V_t = \frac{V_{st} + V_{et}}{2}$$ .

Further, the calculation module is further configured to, when the judging module judges that the braking condition is not met, based on the updated values of the intermediate variables, determine the initial braking velocity and the final braking velocity of the train, and calculate and obtain the braking distance $S_b$, where the velocity $V_s$ of the train at the starting point of the deceleration zone is taken as the initial braking velocity, and the intermediate variable $V_t$ with the updated value is taken as the final braking velocity.

Further, the judging module is configured to judge whether the braking condition is met, wherein if the braking condition is met, the calculation mode velocity limit value is obtained, wherein
the calculation mode velocity limit value is the value of the intermediate variable $V_t$.

Further, when the values of $$V_t = \frac{V_s + V_e}{2}$$ and $$V_t = \frac{V_{st} + V_{et}}{2}$$ are non-integers, both the values are rounded down.

When the dichotomy-based algorithm and system for calculating a calculation mode velocity limit value provided by the present invention calculates the calculation mode velocity limit value at any target position in the deceleration zone, based on the calculation parameters acquired, the intermediate variables are valued initially; the intermediate is let to be

$$V_t = \frac{V_s + V_e}{2}$$ ; the braking distance is solved by taking the velocity $V_s$ of the train at the starting point of the deceleration zone as the initial braking velocity and the intermediate $V_t$ as the final braking velocity; two braking conditions are adopted to judge whether a calculation stopping demand is met, so that when the calculation mode velocity limit value in the deceleration zone is calculated, the final value (the calculation mode velocity limit value to be solved) approaches left and right between the upper limit of the velocity search range and the lower limit of the velocity search range by the dichotomy, so as to acquire the value of the intermediate value $V_t$; therefore, the number to calculate velocities to between $V_s$ and $V_e$ is effectively reduced; it is not necessary to traverse all velocity between $V_s$ and $V_e$, so the algorithm complexity of the calculation mode velocity limit value is reduced, and the efficiency and precision of the calculation mode velocity limit value are improved.

In addition, when the braking conditions are set, whether the difference value between $V_{st}$ and $V_{et}$ is less than or equal to 1 is fully considered; as the minimum unit of the calculation mode velocity limit value is 1 Km/h, when the intermediate value between $V_{st}$ and $V_{et}$ is less than or equal to 1, the intermediate value $V_t$ between $V_{st}$ and $V_{et}$ is rounded down, the value of $V_t$ is $V_{et}$, and at this time, the velocity at the target position is the minimum velocity $V_{et}$ therebetween between the upper limit of the velocity search range and the lower limit of the velocity search range, to guarantee that the velocity of the train will not exceed the limited velocity at the target position, so that the dichotomy-based algorithm and system for calculating the calculation mode velocity limit value is more reliable, and the safety of the train operation is also fully guaranteed.

Other characteristics and advantages of the embodiments of the present invention will be described in the follow-up description, and become obvious from the description partially or are understood by implementing the embodiments of the present invention. Objects and other advantages of the present invention can be realized and gained by structures indicated in the description, claims, and drawings.

## BRIEF DESCRIPTION OF THE DRAWINGS

In order to describe the embodiments of the present invention or the technical scheme in the prior art more clearly, brief introduction on drawings needed to be used in the embodiment will be made below. It is obvious that the drawings described below are some embodiments of the present invention, and those skilled in the technical field further can obtain other drawings according to the drawings without creative efforts.

FIG. 1 shows a flowchart of a dichotomy-based algorithm for calculating a calculation mode velocity limit value in an embodiment of the present invention;
FIG. 2 shows a flowchart of another dichotomy-based algorithm for calculating a calculation mode velocity limit value in the embodiment of the present invention; and
FIG. 3 shows a structural diagram of another dichotomy-based system for calculating a calculation mode velocity limit value in the embodiment of the present invention.

## DESCRIPTION OF THE EMBODIMENTS

To make the objectives, technical solutions and advantages of embodiments of the present disclosure more obvious, the technical solutions of the present disclosure will be clearly and completely described below in conjunction with the accompanying drawings in the embodiments of the present disclosure, and obviously, the described embodiments are some, rather than all of the embodiments of the present disclosure. On the basis of the embodiments in the present invention, all other embodiments obtained by those of ordinary skill in the technical field without making creative efforts fall into the scope of protection of the present invention.

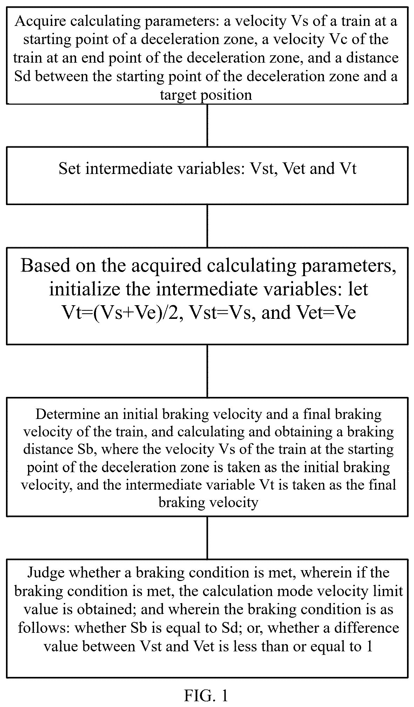

As shown in FIG. 1, the embodiment of the present invention introduces a dichotomy-based algorithm and system for calculating a calculation mode velocity limit value. The algorithm includes the following steps: first, acquiring calculating parameters: a velocity $V_s$ of a train at a starting point of a deceleration zone, a velocity $V_e$ of the train at an end point of the deceleration zone, and a distance $S_d$ between the starting point of the deceleration zone and a target position; then, setting intermediate variables: $V_{st}$, $V_{et}$, and $V_t$, where $V_{st}$ is an upper limit of a velocity search range, $V_{et}$ is a lower limit of the velocity search range, and $V_t$ is an intermediate value of the current velocity search range between $V_{st}$ and $V_{et}$; then

based on the calculation parameters acquired, initializing the intermediate values: letting $$V_t = \frac{V_s + V_e}{2}$$ , $V_{st} = V_s$, and

$V_{et} = V_e$ ; then, determining an initial braking velocity and a final braking velocity of the train, and calculating and obtaining a braking distance $S_b$, where the velocity $V_s$ of the train at the starting point of the deceleration zone is taken as the initial braking velocity, and the intermediate variable $V_t$ is taken as the final braking velocity; and finally, judging whether a braking condition is met, where if the braking condition is met, the calculation mode velocity limit value is obtained; and where the braking condition is as follows: whether $S_b$ is equal to $S_d$ ; or, whether a difference value between $V_{st}$ and $V_{et}$ is less than or equal to 1. The intermediate variables are valued initially; the intermediate is let to be $V_t = \dfrac{V_s + V_e}{2}$ (it can also be written as $V_t = \dfrac{V_{st} + V_{et}}{2}$ , and when the parameters are initialized $V_t = \dfrac{V_s + V_e}{2}$ ); the braking distance is solved by taking the velocity $V_s$ of the train at the starting point of the deceleration zone as the initial braking velocity and the intermediate $V_t$ as the final braking velocity; two braking conditions are adopted to judge whether a calculation stopping demand is met, so that when the calculation mode velocity limit value in the deceleration zone is calculated, it approaches left and right between the upper limit of the velocity search range and the lower limit of the velocity search range by the dichotomy, so as to acquire the value of the intermediate value $V_t$; therefore, the number to calculate velocities to between $V_s$ and $V_e$ is effectively reduced; it is not necessary to traverse all velocity between $V_s$ and $V_e$, so the algorithm complexity of the calculation mode velocity limit value is reduced, and the efficiency and precision of the calculation mode velocity limit value are improved.

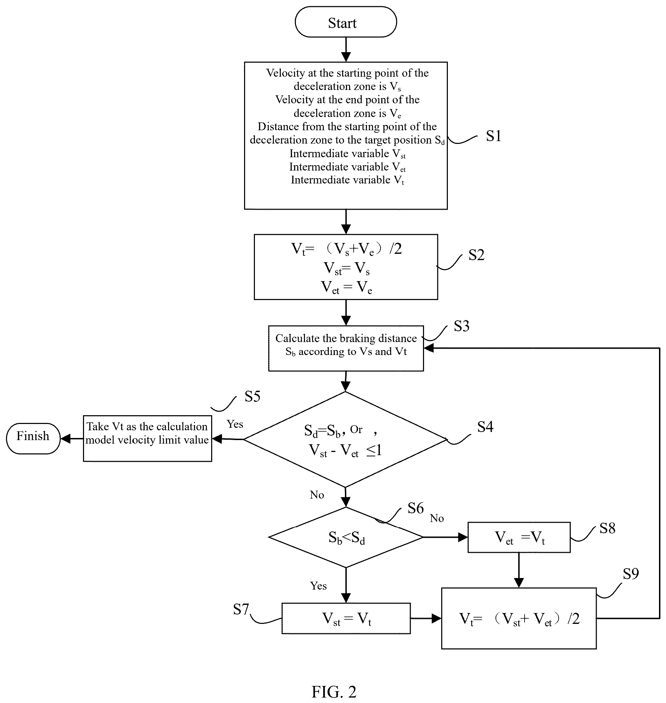

Specifically, as shown in FIG. 2, when the calculation mode velocity limit value at any target position in the deceleration zone is calculated, it approaches left and right between the upper limit of the velocity search range and the lower limit of the velocity search range by the dichotomy, so as to acquire the value of the intermediate value $V_t$; the braking distance at the velocity is calculated; and combined with the distance $S_d$ from the target position, the calculation mode velocity limit value at the target position is acquired, specifically including the following steps:

S1: acquiring the calculation parameters: the velocity $V_s$ of the train at the starting point of the deceleration zone, the velocity $V_e$ of the train at the end point of the deceleration zone, and the distance $S_d$ between the starting point of the deceleration zone and the target position, and setting the intermediate variables $V_{st}$, $V_{et}$, and $V_t$, where $V_{st}$ is the upper limit of the velocity search range, $V_{et}$ is the lower limit of the velocity search range, and $V_t$ is the intermediate value of the current velocity search range between $V_{st}$ and $V_{et}$ ; and as the value of $V_t$ is taken by approaching left and right with it being in the middle in the velocity search range, it shall be between $V_{st}$ and $V_{et}$.

S2: based on the calculation parameters acquired, initializing the intermediate variables $V_t = \dfrac{V_s + V_e}{2}$ , $V_{st} = V_s$ , and $V_{et} = V_e$, where the value of $V_t = \dfrac{V_s + V_e}{2}$ is a non-integer, and the value is rounded down; by initializing the parameters, the range of the velocities from the starting point of the deceleration zone to the target point is reduced, so that the calculation efficiency and precision of the calculation mode velocity limit value are improved.

S3: calculating and obtaining the braking distance $S_b$ by taking the velocity $V_s$ of the train at the starting point of the deceleration zone as the initial braking velocity and the intermediate variable $V_t$ as the final braking velocity; further, an equation for calculating the braking distance $S_b$ is shown as follows:

$$S_b = S_k + S_e = \frac{v_s t_k}{3.6} + \frac{4.17(v_s^2 - v_t^2)}{1000\,\varphi_h \vartheta_h \beta_c + w_0 + i_j}$$

where is the braking distance, with the unit of m (meter), $S_k$ is an idling stopping distance, with the unit of m, $S_e$ is an effective braking distance, with the unit of m, $V_s$ is the initial braking velocity, with the unit of km/h (kilometer/hour), $V_t$ is the final braking velocity, with the unit of km/h, $t_k$ is an idling braking time, with the unit of s (second), $\varphi_h$ is a shoe(brake pad) converted friction coefficient, $\vartheta_h$ is a train converted braking ratio, $\beta_c$ is a constant braking coefficient, $w_0$ is unit basic resistance of the train, with the unit of N/kN (Newton/kilonewton), and $i_j$ is an added slope of permillage of a braking section.

S4: judging whether the braking distance $S_b$ is equal to $S_d$, or whether the difference value between the intermediate variables $V_{st}$ and $V_{et}$ is less than or equal to 1, where when the braking distance $S_b$ is equal to the distance $S_d$ or the difference value between $V_{st}$ and $V_{et}$ is less than or equal to 1, executing the S5; otherwise, executing the S6; specifically, finishing calculation if only one of the two judging conditions is met. For the second condition, in the LKJ, the minimum unit of the calculation mode velocity limit value is 1 Km/h (kilometer/hour); in the dichotomous operation, if the difference value between $V_s$ and $V_e$ in the calculation process is 1, or the difference value between $V_{st}$ and $V_{et}$ is 1 or less than 1, when the value of $V_t = \dfrac{V_s + V_e}{2}$ or $V_t = \dfrac{V_{st} + V_{et}}{2}$ which is the non-integer, the value is rounded down, the value of $V_t$ when being rounded down is $V_{et}$, and at this time, the velocity at the target position is the minimum velocity $V_{et}$ therebetween between the upper limit of the velocity search range and the lower limit of the velocity search range; if the operation is continued, the dichotomous operation will fall into a endless loop; therefore, when $V_{st}$ - $V_{et}$ <= 1, the calculation mode velocity limit value is obtained, to guarantee that the velocity of the train will not exceed the limited velocity at the target position, so that the dichotomy-based algorithm and system for calculating the calculation mode velocity limit value is more reliable, and the safety of the train operation is also fully guaranteed.

S5: The value of the intermediate variable $V_t$ is the calculation mode velocity limit value. Exemplarily, if the calculation mode velocity limit value at the target position is obtained by the first calculation, i.e., the calculation mode velocity limit value at the target position (the position $S_d$ where the distance between the position and the starting point of the deceleration zone is formula) is $V_t = \dfrac{V_s + V_e}{2}$ .

S6: judging whether $S_b$ is less than $S_d$ , where if $S_b$ is less than $S_d$ , executing the S7, and otherwise, executing the S8;

S7: letting $V_{st} = V_t$, and executing the S9;

S8: letting $V_{et=}$ $V_t$, and executing the S9; and

S9: letting $V_t = \dfrac{V_{st} + V_{et}}{2}$ , rounding down when $V_t = \dfrac{V_{st} + V_{et}}{2}$ is the non-integer, and returning to the S3. In the embodiment of the present invention, when the values of the intermediate variables are updated, if $S_b$ is less than $S_d$ , the intermediate variable $V_{st}$ $t_k$ is let to be $V_t$, $V_{et}$ unchanged, $V_t = \dfrac{V_{st} + V_{et}}{2}$ ; and if $S_b$ is greater than $S_d$, the intermediate variable $V_{et}$ is let to be $V_t$, $V_{st}$ unchanged, $V_t = \dfrac{V_{st} + V_{et}}{2}$ . When the difference value between $V_{st}$ and $V_{et}$ is greater than 1, the intermediate variables are updated, where if $S_b$ is less than $S_d$, it is indicated that the braking distance capable of being achieved by the value of $V_t$ is between the position corresponding to $V_{st}$ and the target position $S_d$, i.e., the value of $V_t$ is currently between $V_{st}$ and the final value to be solved; the value of $V_t$ is greater than the final value $V_t$ to be solved, so that $V_{st}$ is let to be= $V_t$, it approaches from left side (equivalently taking the final value $V_t$ to be solved as a reference point) to lessen the velocity value range of $V_t$; if $S_b$ is greater than $S_d$, it $t_k$ is indicated that the braking distance capable of being achieved by the value of $V_t$ is between the target position $S_d$ and the position corresponding to $V_{et}$, i.e., the value of $V_t$ is currently between the final value to be solved and $V_{et}$; the value of $V_t$ is less than the final value $V_t$ to be solved, so that $V_{et}$ is let to be=$V_t$, and it approaches from the right side to less the velocity value range of $V_t$; and based on the upper limit and the lower limit of the velocity search range with the lessened range, the value of the intermediate variable $V_t$ is acquired again (i.e., the intermediate value between the upper limit and the lower limit of the velocity search range). Further, when the braking distance is calculated in the present invention, the number to calculate velocities to between $V_s$ and $V_e$ is effectively reduced by dichotomy; when the calculation mode velocity limit value at any target position is calculated, it is not necessary to traverse all velocity from $V_s$ to $V_e$ , so the algorithm complexity of the calculation mode velocity limit value is reduced, and the efficiency and precision of the calculation mode velocity limit value are improved.

In the embodiment, when the value of $V_t = \dfrac{V_s + V_e}{2}$ or $V_t = \dfrac{V_{st} + V_{et}}{2}$ $t_k$ is the non-integer, the value is rounded down.

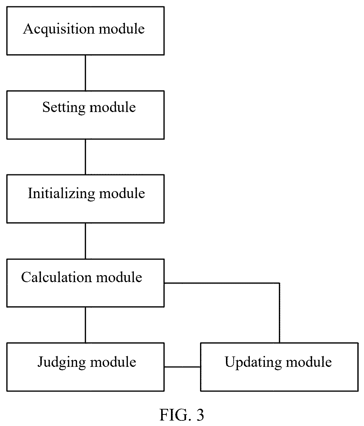

As shown in FIG. 3, the embodiment of the present invention further introduces a system capable of executing the above method. The system is a dichotomy-based system for calculating a calculation mode velocity limit value, including: an acquisition module, a setting module, an initializing module, a calculation module, and a judging module, where the acquisition module is configured to acquire calculating parameters: a velocity $V_s$ of a train at a starting point of a deceleration zone, a velocity $V_e$ of the train at an end point of the deceleration zone, and a distance $S_d$ between the starting point of the deceleration zone and a target position; the setting module is configured to set intermediate variables: $V_{st}$ , $V_{et}$ and $V_t$, where $V_{st}$ is an upper limit of a velocity search range, $V_{et}$ is a lower limit of the velocity search range, and $V_t$ is an intermediate value of the current velocity search range between $V_{st}$ and $V_{et}$ ; the initializing module is configured to, based on the acquired calculating parameters, initialize the intermediate variables: letting $V_t = \dfrac{V_s + V_e}{2}$, $V_{st} = V_s$, and $V_{et} = V_e$; the calculation module is configured to determine an initial braking velocity and a final braking velocity of the train, and calculate and obtain a braking distance $S_b$, where the velocity $V_s$ of the train at the starting point of the deceleration zone is taken as the initial braking velocity, and the intermediate variable $V_t$ is taken as the final braking velocity; and the judging module is configured to judge whether a braking condition is met, wherein if the braking condition is met, the calculation mode velocity limit value is obtained; the braking condition is as follows: whether $S_b$ is equal to $S_d$; or, whether a difference value between $V_{st}$ and $V_{et}$ is less than or equal to 1.

The system further includes an update module, configured to, when the judging module judges that the braking condition is not met, update the values of the intermediate variables, including:

judging whether $S_b$ is less than $S_d$, if $S_b$ is less than $S_d$, letting the intermediate variable $V_{st} = V_t$, $V_{et}$ unchanged, $V_t = \dfrac{V_{st} + V_{et}}{2}$, and the value of $V_t = \dfrac{V_{st} + V_{et}}{2}$ is rounded down; and if not, letting the intermediate variable $V_{et} = V_t$, $V_{st}$ unchanged, $V_t = \dfrac{V_{st} + V_{et}}{2}$, and the value of $V_t = \dfrac{V_{st} + V_{et}}{2}$ is rounded down. By updating the intermediate variables, when the braking distance is calculated, the number to calculate velocities to between $V_s$ and $V_e$ is effectively reduced; it is not necessary to traverse all velocity from $V_s$ to $V_e$, so the efficiency of acquiring the calculation mode velocity limit value is improved.

The calculation module is further configured to, when the judging module judges that the braking condition is not met, based on the updated values of the intermediate variables, determine the initial braking velocity and the final braking velocity of the train, and calculate and obtain the braking distance $S_b$, where the velocity $V_s$ of the train at the starting point of the deceleration zone is taken as the initial braking velocity, and the intermediate variable $V_t$ with the updated value is taken as the final braking velocity. Then, the judging module performs judgment, which is not described in detail herein.

The judging module is configured to judge whether the braking condition is met, wherein if the braking condition is met, the calculation mode velocity limit value is obtained, wherein the calculation mode velocity limit value is the value of the intermediate variable $V_t$.

In the embodiment, when the value of $V_t = \dfrac{V_s + V_e}{2}$ or $V_t = \dfrac{V_{st} + V_{et}}{2}$ is the non-integer, the value is rounded down.

In the embodiment, when the dichotomy-based algorithm and system for calculating a calculation mode velocity limit value provided by the present invention calculates the calculation mode velocity limit value at any target position in the deceleration zone, based on the calculation parameters acquired, the intermediate variables are valued initially; the intermediate is let to be $V_t = \dfrac{V_s + V_e}{2}$; the braking distance is solved by taking the velocity $V_s$ of the train at the starting point of the deceleration zone as the initial braking velocity and the intermediate $V_t$ as the final braking velocity; two braking conditions are adopted to judge whether a calculation stopping demand is met, so that when the calculation mode velocity limit value in the deceleration zone is calculated, it approaches left and right between the upper limit of the velocity search range and the lower limit of the velocity search range by the dichotomy, to acquire the value of the intermediate value $V_t$; therefore, the number to calculate velocities to between $V_s$ and $V_e$ is effectively reduced; it is not necessary to traverse all velocity between $V_s$ and $V_e$, so the algorithm complexity of the calculation mode velocity limit value is reduced, and the efficiency and precision of the calculation mode velocity limit value are improved.

In addition, when the braking conditions are set, whether the difference value between $V_{st}$ and $V_{et}$ is less than or equal to 1 is fully considered; as the minimum unit of the calculation mode velocity limit value is 1 Km/h, when the difference value between $V_s$ and $V_e$ is 1, or the intermediate value between $V_{st}$ and $V_{et}$ is less than or equal to 1, or the value of $V_t$ is $V_{et}$ when $V_t = \dfrac{V_s + V_e}{2}$ and $V_t = \dfrac{V_{st} + V_{et}}{2}$ are rounded down, and at this time, the velocity at the target position is the minimum velocity $V_{et}$ therebetween between the upper limit of the velocity search range and the lower limit of the velocity search range, to guarantee that the velocity of the train at the end point of the deceleration zone will not exceed the limited velocity due to the calculation mode velocity limit value acquired at the target position, so that the dichotomy-based algorithm and system for calculating the calculation mode velocity limit value is more reliable, and the safety of the train operation is also fully guaranteed.

The above embodiments are merely used for explaining the technical solution of the present invention rather than limiting the present invention. Despite reference to the aforementioned embodiments to make a detailed description for the present invention, it will be understood by those of ordinary skill in the art that they still can modify the technical scheme recorded by the aforementioned embodiments or make equivalent substitutions on part of technical features therein. Such modifications or substitutions do not deviate the nature of the technical solution from the spirit and scope of the technical solution embodied in the embodiments according to the present invention.

**Claims**

1. A dichotomy-based algorithm for calculating a calculation mode velocity limit value, **characterized by** comprising the following steps:

   acquiring calculating parameters: a velocity $V_s$ of a train at a starting point of a deceleration zone, a velocity $V_e$ of the train at an end point of the deceleration zone, and a distance $S_d$ between the starting point of the deceleration zone and a target position;
   setting intermediate variables: $V_{st}$, $V_{et}$, and $V_t$, where $V_{st}$ is an upper limit of a velocity search range, $V_{et}$ is a lower limit of the velocity search range, and $V_t$ is an intermediate value of the current velocity search range between $V_{st}$ and $V_{et}$;
   based on the acquired calculating parameters, initializing the intermediate variables: letting $V_t = \dfrac{V_s + V_e}{2}$, $V_{st} = V_s$, and $V_{et} = V_e$;
   determining an initial braking velocity and a final braking velocity of the train, and calculating and obtaining a braking distance $S_b$, where the velocity $V_s$ of the train at the starting point of the deceleration zone is taken as the initial braking velocity, and the intermediate variable $V_t$ is taken as the final braking velocity; and
   judging whether a braking condition is met, wherein if the braking condition is met, the calculation mode velocity limit value is obtained; and
   the braking condition is as follows:

   whether $S_b$ is equal to $S_d$; or,
   whether a difference value between $V_{st}$ and $V_{et}$ is less than or equal to 1.

2. The dichotomy-based algorithm for calculating a calculation mode velocity limit value according to claim 1, **characterized in that** the step of judging whether a braking condition is met further comprises: if the braking condition is not met,

   updating values of the intermediate variables;
   based on the updated values of the intermediate variables, returning, and determining the initial braking velocity and the final braking velocity of the train, and calculating and obtaining the braking distance $S_b$, where the velocity $V_s$ of the train at the starting point of the deceleration zone is taken as the initial braking velocity, and the intermediate variable $V_t$ with the updated value is taken as the final braking velocity.

3. The dichotomy-based algorithm for calculating a calculation mode velocity limit value according to claim 2, **characterized in that** the step of updating the values of the intermediate variables comprises:
   judging whether $S_b$ is less than $S_d$, if $S_b$ is less than $S_d$, letting the intermediate variable $V_{st} = V_t$, $V_{et}$ unchanged, $V_t = \dfrac{V_{st} + V_{et}}{2}$; and if not, letting the intermediate variable $V_{et} = V_t$, $V_{st}$ unchanged, $V_t = \dfrac{V_{st} + V_{et}}{2}$.

4. The dichotomy-based algorithm for calculating a calculation mode velocity limit value according to any one of claims 1-3, **characterized in that** when the values of $V_t = \dfrac{V_s + V_e}{2}$ and $V_t = \dfrac{V_{st} + V_{et}}{2}$ are non-integers, both the values are rounded down.

5. The dichotomy-based algorithm for calculating a calculation mode velocity limit value according to claim 4, **characterized in that** whether the braking condition is met is judged, and if the braking condition is met, the calculation mode velocity limit value is obtained, wherein
   the calculation mode velocity limit value is the value of the intermediate variable $V_t$.

6. A dichotomy-based system for calculating a calculation mode velocity limit value, **characterized by** comprising:

an acquisition module, configured to acquire calculating parameters: a velocity $V_s$ of a train at a starting point of a deceleration zone, a velocity $V_e$ of the train at an end point of the deceleration zone, and a distance $S_d$ between the starting point of the deceleration zone and a target position;

a setting module, configured to set intermediate variables: $V_{st}$, $V_{et}$, and $V_t$, where $V_{st}$ is an upper limit of a velocity search range, $V_{et}$ is a lower limit of the velocity search range, and $V_t$ is an intermediate value of the current velocity search range between $V_{st}$ and $V_{et}$

an initializing module, configured to, based on the acquired calculating parameters, initialize the intermediate variables: letting $V_t = \dfrac{V_s + V_e}{2}$, $V_{st} = V_s$, and $V_{et} = V_e$;

a calculation module, configured to determine an initial braking velocity and a final braking velocity of the train, and calculate and obtain a braking distance $S_b$, where the velocity $V_s$ of the train at the starting point of the deceleration zone is taken as the initial braking velocity, and the intermediate variable $V_t$ is taken as the final braking velocity; and

a judging module, configured to judge whether a braking condition is met, wherein if the braking condition is met, the calculation mode velocity limit value is obtained; and

the braking condition is as follows:

whether $S_b$ is equal to $S_d$ ; or,

whether a difference value between $V_{st}$ and $V_{et}$ is less than or equal to 1.

7. The dichotomy-based system for calculating a calculation mode velocity limit value according to claim 6, **characterized by** further comprising an update module, configured to, when the judging module judges that the braking condition is not met, update the values of the intermediate variables, comprising:

judging whether $S_b$ is less than $S_d$ , if $S_b$ is less than $S_d$ , letting the intermediate variable $V_{st} = V_t$, $V_{et}$ unchanged, $V_t = \dfrac{V_{st} + V_{et}}{2}$ ; and if not, letting the intermediate variable $V_{et} = V_t$, $V_{st}$ unchanged, $V_t = \dfrac{V_{st} + V_{et}}{2}$ .

8. The dichotomy-based system for calculating a calculation mode velocity limit value according to claim 7, **characterized in that** the calculation module is further configured to, when the judging module judges that the braking condition is not met, based on the updated values of the intermediate variables, determine the initial braking velocity and the final braking velocity of the train, and calculate and obtain the braking distance $S_b$, where the velocity $V_s$ of the train at the starting point of the deceleration zone is taken as the initial braking velocity, and the intermediate variable $V_t$ with the updated value is taken as the final braking velocity.

9. The dichotomy-based system for calculating a calculation mode velocity limit value according to any one of claims 7-8, **characterized in that** the judging module is configured to judge whether the braking condition is met, if the braking condition is met, the calculation mode velocity limit value is obtained, wherein

the calculation mode velocity limit value is the value of the intermediate variable $V_t$.

10. The dichotomy-based system for calculating a calculation mode velocity limit value according to claim 9, **characterized in that** when the values of $V_t = \dfrac{V_s + V_e}{2}$ and $V_t = \dfrac{V_{st} + V_{et}}{2}$ are non-integers, both the values are rounded down.

Acquire calculating parameters: a velocity Vs of a train at a
starting point of a deceleration zone, a velocity Vc of the
train at an end point of the deceleration zone, and a distance
Sd between the starting point of the deceleration zone and a
target position

Set intermediate variables: Vst, Vet and Vt

Based on the acquired calculating parameters,
initialize the intermediate variables: let
Vt=(Vs+Ve)/2, Vst=Vs, and Vet=Ve

Determine an initial braking velocity and a final braking
velocity of the train, and calculating and obtaining a braking
distance Sb, where the velocity Vs of the train at the starting
point of the deceleration zone is taken as the initial braking
velocity, and the intermediate variable Vt is taken as the final
braking velocity

Judge whether a braking condition is met, wherein if the
braking condition is met, the calculation mode velocity limit
value is obtained; and wherein the braking condition is as
follows: whether Sb is equal to Sd; or, whether a difference
value between Vst and Vet is less than or equal to 1

FIG. 1

Start

Velocity at the starting point of the
deceleration zone is $V_s$
Velocity at the end point of the
deceleration zone is $V_e$
Distance from the starting point of the
deceleration zone to the target position $S_d$
Intermediate variable $V_{st}$
Intermediate variable $V_{et}$
Intermediate variable $V_t$ — S1

$V_t = (V_s + V_e)/2$
$V_{st} = V_s$
$V_{et} = V_e$ — S2

S3
Calculate the braking distance
$S_b$ according to Vs and Vt

S5
Take Vt as the calculation
model velocity limit value — Yes

Finish

$S_d = S_b$, Or ,
$V_{st} - V_{et} \leq 1$ — S4

No

S6 No

$S_b < S_d$

$V_{et} = V_t$ — S8

S9

Yes

S7 — $V_{st} = V_t$

$V_t = (V_{st} + V_{et})/2$

FIG. 2

Acquisition module

Setting module

Initializing module

Calculation module

Judging module

Updating module

FIG. 3